# EUROPÄISCHE PATENTSCHRIFT

(11) **EP 4 211 000 B1**
(45) Veröffentlichungstag und Bekanntmachung des Hinweises auf die Patenterteilung: **13.12.2023**
(21) Anmeldenummer: 21798379.0
(22) Anmeldetag: 22.10.2021
(51) Int. Cl.: B60Q 3/20

(54) **KRAFTFAHRZEUG-LEUCHTEINRICHTUNG MIT EINER VIELZAHL VON LICHTQUELLEN UND JEWEILS ZUGEORDNETEN OPAK-SCHALTBAREN ABDECKSEGMENTEN; KRAFTFAHRZEUG SOWIE VERFAHREN**
MOTOR VEHICLE LIGHTING DEVICE WITH A PLURALITY OF LIGHT SOURCES WITH RESPECTIVE PAIRED COVER SEGMENTS WHICH CAN BE SWITCHED SO AS TO BE OPAQUE; MOTOR VEHICLE; AND METHOD
DISPOSITIF D'ÉCLAIRAGE DE VÉHICULE À MOTEUR COMPRENANT UNE PLURALITÉ DE SOURCES DE LUMIÈRE AYANT DES SEGMENTS DE COUVERCLE APPARIÉS RESPECTIFS QUI PEUVENT ÊTRE COMMUTÉS DE SORTE À ÊTRE OPAQUES ; VÉHICULE À MOTEUR ; ET PROCÉDÉ

(30) Priorität: 03.12.2020 DE 102020132098
(43) Veröffentlichungstag der Anmeldung: 19.07.2023
(73) Patentinhaber: Audi AG, 85045 Ingolstadt (DE)
(72) Erfinder: HÉLOT, Jacques, 85051 Ingolstadt (DE)
(74) Vertreter: Hofstetter, Schurack & Partner
(86) Internationale Anmeldenummer: PCT/EP2021/079310
(87) Internationale Veröffentlichungsnummer: WO 2022/117256

(56) Entgegenhaltungen:
- DE-A1-102017 212 657
- US-A1- 2018 326 900

## Beschreibung

Die Erfindung betrifft eine Kraftfahrzeug-Leuchteinrichtung wie in Anspruch 1, mit einem Leuchtelement mit einer Vielzahl an Lichtquellen sowie einem Abdeckelement, welches dazu ausgebildet ist, zwischen einem transparenten und einem opaken Betriebszustand zu wechseln. Außerdem betrifft die Erfindung ein Kraftfahrzeug wie in Anspruch 7, mit einer solchen Kraftfahrzeug-Leuchteinrichtung sowie ein Verfahren gemäß Anspruch 9 zum Betreiben einer solchen Kraftfahrzeug-Leuchteinrichtung.

Aus dem Stand der Technik bekannt sind elektrisch schaltbare Folien und/oder Gläser, welche zwischen einem transparenten beziehungsweise klaren und einem opaken Betriebszustand schaltbar sind. Beispielsweise offenbaren die DE 100 31 294 A1 sowie die DE 100 21 984 A1 jeweils eine Verbundfolie mit elektrisch schaltbaren optischen Eigenschaften, enthaltend eine zwischen zwei Elektroden befindliche Suspension aus elektrophoretisch mobilen Partikeln, wobei die Suspension einen negativen elektrorheologischen Effekt zeigt. Die Verbundfolie können zur Herstellung von Flachbildschirmen, Uhren, Anzeigetafeln oder Computern verwendet werden.

Die DE 30 31 126 A1 beschreibt eine Vorrichtung zum Darstellen von Bildern aus mehreren Bildsegmenten, mit einem vorzugsweise plattenförmigen Körper, der aus einem transparenten Trägermaterial mit einem Brechungsindex größer 1 besteht und fluoreszierende Partikel enthält, wobei auf der einen Seite des Fluoreszenzkörpers, und zwar jeweils im Bereich eines der Bildsegmente, zwei transparente Elektroden sowie eine elektrisch zwischen zwei optisch verschiedenen Zuständen schaltbare Flüssigkristallschicht angeordnet sind. Die Druckschrift zeigt außerdem, dass sich die beiden Elektroden eines jeden Bildsegments in einer zwischen dem Fluoreszenzkörper und der Flüssigkristallschicht gelegenen Ebene befinden und zusammen eine Interdigitalstruktur bilden und dass die Flüssigkristallschicht aus einem festen Polymer mit schaltbaren mesogenen Bestandteilen besteht.

In Bezug auf ein Kraftfahrzeug zeigt die DE 10 2017 212 912 A1 eine Anzeigevorrichtung, aufweisend: Ein erstes, flächiges Anzeigeelement, das in einer ersten Anzeigeebene der Anzeigevorrichtung angeordnet ist, und mindestens ein weiteres, flächiges Anzeigeelement, das jeweils in einer weiteren Anzeigeebene der Anzeigevorrichtung angeordnet und in einer Sichtrichtung eines Benutzers dem ersten Anzeigeelement vorgelagert angeordnet ist. Das mindestens eine weitere Anzeigeelement bildet mit dem ersten Anzeigeelemente eine mehrschichtige Kombination von Anzeigeelementen, wobei das mindestens eine weitere Anzeigeelement jeweils eine zumindest teilweise transparente Anzeigefläche und jeweils ein Sichtschutzelement zum Einstellen eines Grads einer Transparenz mindestens eines Bereichs des Anzeigeelements aufweist.

Ferner offenbart die DE 10 2017 212 657 A1 eine Fensterscheibeneinrichtung für ein Fenster eines Kraftfahrzeugs, mit wenigstens einer Scheibe, die für auf Durchsichtsflächen der Scheibe auftreffendes Licht eine transparente Fensterscheibe darstellt und für an einer Schmalseite in die Scheibe eingekoppeltes Licht einen zwischen den Durchsichtsflächen entlang leitenden Lichtleiter darstellt, und mit einer wenigstens ein Leuchtelement aufweisenden Lichtquelle, mittels welcher Licht in die Scheibe über die Schmalseite der Scheibe einleitbar ist, und mit wenigstens einem Auskoppelelement, mittels welchem das zwischen den Durchsichtsflächen geführte Licht aus zumindest einer der Durchsichtsflächen hinaus in einen Innenraum und/oder in eine Umgebung des Kraftfahrzeugs auskoppelbar ist.

Zur Beleuchtung eines Innenraums ist bei neuartigen Kraftfahrzeugen beispielsweise eine als Lichtband ausgebildete Kraftfahrzeug-Leuchteinrichtung vorgesehen. Eine solche Kraftfahrzeug-Leuchteinrichtung beziehungsweise ein solches Lichtband ist beispielsweise an einer Scheibenwurzel des Kraftfahrzeugs, also zwischen Windschutzscheibe und Armaturenbrett, angeordnet. Eine derartige Kraftfahrzeug-Leuchteinrichtung beziehungsweise ein solches Lichtband kann sich zumindest im Wesentlichen über den gesamten Bereich zwischen zwei A-Säulen des Kraftfahrzeugs erstrecken. Insbesondere ist das Lichtband als LED-Lichtband ausgeführt. Ein derartiges Leuchtband kann auch in der Schalttafel, in den Türen, Boden, Dach oder in den Säulen untergebracht sein.

Bei den heutigen Lichtleisten können mehrere Farben dargestellt werden. Wenn aber zwei Farben nebeneinander dargestellt werden, so gibt es immer einen Farbverlauf zwischen den Farben. Das sieht nicht präzise aus. Oder, falls ein Bereich der Lichtleiste an ist und ein Bereich aus, gibt es einen Helligkeitsverlauf an der Grenze zwischen den Bereichen.

Es ist Aufgabe der vorliegenden Erfindung, eine verbesserte Darstellung von Konturen an einer solchen Kraftfahrzeug-Leuchteinrichtung zu ermöglichen. Es ist außerdem Aufgabe, eine klare Trennung zwischen eingeschalteten und ausgeschalteten Bereiche und/oder zwischen unterschiedlichen Farbbereichen zu ermöglichen.

Diese Aufgabe wird erfindungsgemäß gelöst durch die Gegenstände der unabhängigen Patentansprüche. Vorteilhafte Ausführungsformen mit zweckmäßigen Weiterbildungen sind Gegenstand der Unteransprüche.

Ein erster Aspekt der vorliegenden Erfindung betrifft eine Kraftfahrzeug-Leuchteinrichtung mit einem Leuchtelement mit einer Vielzahl an Lichtquellen und einem Abdeckelement, welches dazu ausgebildet ist, zwischen einem transparenten und einem opaken Betriebszustand zu wechseln.

Erfindungsgemäß ist vorgesehen, dass das Abdeckelement eine Vielzahl an Abdecksegmenten aufweist, wobei jedes der Abdecksegmente hinsichtlich des transparenten und opaken Betriebszustands einzeln ansteuerbar ist, und die Kraftfahrzeug-Leuchteinrichtung ein Lichtleitelement aufweist, wobei das Lichtleitelement dazu ausgebildet ist, durch die Lichtquellen der Vielzahl abgestrahltes Licht von einer Vielzahl erster Koppelflächen, an welchen das Lichtleitelement optisch an jeweils eine der Lichtquellen angekoppelt ist, zu einer Vielzahl zweiter Koppelflächen zu leiten, an welchen das Lichtleitelement optisch an jeweils eines der Abdecksegmente angekoppelt ist, wobei die zweiten Koppelflächen jeweils größer als die ersten Koppelflächen sind.

Erfindungsgemäß handelt es sich bei dem Leuchtelement um ein Lichtband .

Das Leuchtelement kann eine Vielzahl an LEDs beziehungsweise Leuchtdioden als Lichtquellen aufweisen. Mit anderen Worten können die Lichtquellen der Vielzahl durch jeweils eine oder mehrere LEDs beziehungsweise Leuchtdioden bereitgestellt sein. Selbstverständlich ist auch jede andere Ausführung von Lichtquellen, beispielsweise durch Halogen-Leuchtmittel, Glühleuchten und/oder Leuchtstoffleuchten beziehungsweise Gasentladungsleuchten möglich. Das Leuchtelement beziehungsweise die Lichtquellen können einfarbig oder mehrfarbig ausgeführt sein. Mit anderen Worten können die Lichtquellen jeweils dazu ausgebildet sein, Licht genau einer Farbe oder Licht mehrerer Farben abzustrahlen. Eine Farbe im Sinne der vorliegenden Anmeldung kann dabei auch durch Licht unterschiedlicher Spektralbereiche zusammengesetzt sein, wie etwa im Falle weißen Lichtes.

Das Abdeckelement kann beispielsweise durch eine schaltbare Folie beziehungsweise eine sogenannte intelligente Folie (z.B. eine PDLC-Folie) und/oder ein sogenanntes schaltbares beziehungsweise intelligentes Glas bereitgestellt sein. Dabei ist das Abdeckelement in jedem der Abdecksegmente einzeln schaltbar. Mit anderen Worten ermöglicht das Abdeckelement, dass die jeweiligen Abdecksegmente jeweils unabhängig voneinander in den transparenten und den opaken Betriebszustand überführt werden können beziehungsweise überführbar sind. Hierfür kann es beispielsweise vorgesehen sein, dass die einzelnen Abdecksegmente zumindest bereichsweise elektrisch voneinander isoliert sind. Durch eine derartige elektrische Isolation kann ein jeweils unterschiedliches elektrisches Potential an die Abdecksegmente angelegt werden. Mit anderen Worten ermöglichen die Abdecksegmente in diesem Fall durch die jeweilige elektrische Isolierung untereinander die Anlegung eines jeweils unterschiedlichen elektrischen Potentials.

Der Betriebszustand des Abdeckelements beziehungsweise der Abdecksegmente kann insbesondere von dem jeweils anliegenden elektrischen Potential abhängig sein. Mit anderen Worten kann das Abdeckelement durch Anlegen einer jeweiligen Spannung beziehungsweise eines jeweiligen elektrischen Potentials von dem transparenten in den opaken Betriebszustand oder von dem opaken Betriebszustand in den transparenten Betriebszustand geschaltet werden. Durch das Anlegen einer jeweiligen elektrischen Spannung beziehungsweise eines jeweiligen elektrischen Potentials können Moleküle des Abdeckelements beziehungsweise der jeweiligen Abdecksegmente ausgerichtet werden. Entsprechend der Ausrichtung der Moleküle, insbesondere langkettige organische Moleküle, können das Abdeckelement beziehungsweise dessen Abdecksegmente transparent beziehungsweise klar oder opak sein.

Es kann vorgesehen sein, dass jedes der Abdecksegmente eine jeweilige oder zwei jeweilige Elektroden aufweist. Die jeweiligen Elektroden der Abdecksegmente können untereinander elektrisch isoliert sein. Auf diese Weise ist das Anlegen einer jeweils unterschiedlichen Spannung an die Elektroden ermöglicht. Beispielsweise kann jedes der Abdecksegmente zwei jeweilige Elektroden aufweisen, welche beide elektrisch von den Elektroden der übrigen Abdecksegmente isoliert sind. Alternativ kann das Abdeckelement eine gemeinsame erste Elektrode aufweisen, welche eine gemeinsame Elektrode aller Abdecksegmente ausbildet. Auf diese Weise können die Abdecksegmente auf einer ersten Seite alle dasselbe elektrische Potential aufweisen. Die jeweilige Spannung an den Abdecksegmenten kann dann durch das elektrische Potential einer jeweiligen zweiten Elektrode der Abdecksegmente vorgebbar sein. Die zweiten Elektroden sind dabei insbesondere jeweils untereinander elektrisch isoliert. Durch eine derartige Ausführung ist einerseits die unabhängige Schaltbarkeit jedes der Abdecksegmente gewährleistet, andererseits kann ein Aufbau des Abdeckelements beziehungsweise der Abdecksegmente mit geringem Aufwand ermöglicht werden.

Insbesondere ist vorgesehen, dass das Abdeckelement das Leuchtelement in Richtung einer Hauptabstrahlrichtung des Leuchtelements beziehungsweise der Vielzahl an Lichtquellen überlappt. Insbesondere ist vorgesehen, dass das Abdeckelement beziehungsweise die Abdecksegmente das Leuchtelement beziehungsweise die Vielzahl an Lichtquellen in Richtung der Hauptabstrahlrichtung vollständig oder zumindest im Wesentlichen vollständig überlappt. Auf diese Weise kann durch das Schalten des Abdeckelements beziehungsweise Abdecksegments zwischen dem transparenten und opaken Betriebszustand eine Lichtabstrahlung der Lichtquellen beziehungsweise des Leuchtelements entlang der Hauptabstrahlrichtung beeinflusst werden. Als Hauptabstrahlrichtung wird dabei insbesondere diejenige Richtung bezeichnet, in welche eine Abstrahlung von Licht durch das Leuchtelement beziehungsweise die Lichtquellen bestimmungsgemäß vorgesehen ist. Insbesondere wird der überwiegende Anteil des durch das Leuchtelement beziehungsweise die Lichtquellen abgestrahlten Lichtes entlang der Hauptabstrahlrichtung abgestrahlt.

Vorteilhafterweise ist vorgesehen, dass das Abdeckelement alle Lichtquellen der Vielzahl in Richtung der Hauptabstrahlrichtung der Kraftfahrzeug-Leuchteinrichtung überlappt. Insbesondere ist vorgesehen, dass jede der Lichtquellen durch zumindest ein Abdecksegment des Abdeckelements in Richtung der Hauptabstrahlrichtung der entsprechenden Lichtquelle überlappt ist. Auf diese Weise kann die Lichtabstrahlung jeder Lichtquelle einzeln durch entsprechendes Ansteuern des entsprechenden Abdecksegmentes beeinflusst werden beziehungsweise beeinflussbar sein. Es kann beispielsweise vorgesehen sein, dass jedes der Abdecksegmente dazu ausgebildet ist, entlang der Hauptabstrahlrichtung durch eine, insbesondere genau eine, der Lichtquellen abgestrahltes Licht durch das Wechseln zwischen dem transparenten und dem opaken Betriebszustand zu beeinflussen. Besonders vorteilhafterweise ergibt sich hierbei eine Eins-zu-Eins-Zuordnung. Das bedeutet beispielsweise, dass jeder der Lichtquellen genau ein jeweiliges Abdecksegment zugeordnet ist und/oder jedem der Abdecksegmente genau eine der Lichtquellen zugeordnet ist.

Insgesamt zeigt sich, wie eine Abstrahlung von Licht durch die Kraftfahrzeug-Leuchteinrichtung mit der erfindungsgemäßen Ausführung des Abdeckelements beziehungsweise der Abdecksegmente besonders vorteilhaft beeinflusst werden kann. Insbesondere ist es möglich, durch das segmentierte Abdeckelement scharfe und/oder weiche Konturen entlang der Lichtquellen einzustellen. Es entsteht somit ein weiterer Freiheitsgrad in der Beeinflussung der Lichtabstrahlung der Kraftfahrzeug-Leuchteinrichtung, nämlich die Ansteuerung der einzelnen Abdecksegmente, zusätzlich zur Ansteuerung der Vielzahl an Lichtquellen beziehungsweise des Leuchtelements. Es entsteht so eine klare Trennung zwischen eingeschalteten und ausgeschalteten Bereiche. Bereiche, welche mit unterschiedlichen Farben leuchten, können auch klar getrennt werden, allerdings gibt es durch die Opazität der Folie lokal keine Farbe auf der Trennung zwischen den Bereichen unterschiedlicher Farbe. Der Farbstreifen wird also dort unterbrochen wo die Farben sich unterscheiden.

Es ist vorgesehen, dass die Lichtquellen der Vielzahl linienförmig angeordnet sind, wobei insbesondere jede Lichtquelle der Vielzahl benachbart zu höchstens zwei Lichtquellen angeordnet ist. Mit anderen Worten können die Lichtquellen der Vielzahl einreihig angeordnet sein. Die Kraftfahrzeug-Leuchteinrichtung ist demnach vorzugsweise langgestreckt ausgeführt. Insbesondere kann sich die Kraftfahrzeug-Leuchteinrichtung dabei linienförmig zwischen den A-Säulen erstrecken, insbesondere entlang der Scheibenwurzel, wie einleitend beschrieben. Durch eine derart langgestreckte Ausführung ergibt sich insbesondere die Möglichkeit, besondere Lichteffekte, beispielsweise entlang der Haupterstreckungsrichtung der linienförmigen Kraftfahrzeug-Leuchteinrichtung zu erzeugen. Gemeinsam mit dem segmentierten Abdeckelement ergibt sich daraus die Möglichkeit, einzelne Segmente entlang der Linienform einzeln anzusteuern. Optional ist jede Lichtquelle der Vielzahl benachbart zu höchstens zwei anderen Lichtquellen der Vielzahl benachbart angeordnet. Auf diese Weise lässt sich ein besonders scharfer, linienförmiger Verlauf der Kraftfahrzeug-Leuchteinrichtung realisieren. Auf diese Weise kann ein Darstellungsgehalt, gemeinsam mit der segmentierten Ausführung des Abdeckelements, weiter verbessert werden.

Es ist vorgesehen, dass das Lichtleitelement zwischen der Vielzahl an Lichtquellen und dem Abdeckelement angeordnet ist. Mit anderen Worten kann das Lichtleitelement räumlich zwischen den Lichtquellen und dem Abdeckelement angeordnet sein. Beispielsweise ist die Vielzahl an Lichtquellen beziehungsweise das Leuchtelement auf einer ersten Seite des Lichtleitelements angeordnet und das Abdeckelement auf einer der ersten Seite abgewandten beziehungsweise gegenüberliegenden zweiten Seite des Lichtleitelements angeordnet. Das Lichtleitelement und das Abdeckelement sind nacheinander entlang der Hauptabstrahlrichtung angeordnet .

Auf diese Weise kann eine besonders homogene Lichtverteilung erzeugt werden, da die Lichtbrechung im Lichtleitelement durch das Abdeckelement nicht gestört wird. Vielmehr erfolgt ein Abdecken beziehungsweise Steuern des abgestrahlten Lichtes durch das Abdeckelement erst nach dessen Austritt aus dem Lichtleitelement.

Gemäß einer Weiterbildung ist vorgesehen, dass das Abdeckelement auf ein Schutzelement laminiert ist. Bei dem Schutzelement kann es sich um ein Glas oder einen transparenten Kunststoff handeln. Durch das Schutzelement kann das Abdeckelement vor Umwelteinflüssen geschützt sein. Insbesondere ist das Abdeckelement auf eine einem Betrachter abgewandte Seite des Schutzelement aufgebracht beziehungsweise auflaminiert. Mit anderen Worten kann das das Abdeckelement auf eine den Leuchtelement zugewandte Seite des Schutzelement aufgebracht beziehungsweise auflaminiert sein.

Gemäß einer Weiterbildung ist vorgesehen, dass das Lichtleitelement zumindest aus einem intransparenten und/oder opaken, aber transluzenten Material gebildet ist. Insbesondere ist vorgesehen, dass das Lichtleitelement aus einem Material gebildet ist, welches transluzent, aber nicht transparent ist. Mit anderen Worten kann das Material intransparent sein. Auf diese Weise ergibt sich eine besonders gleichmäßige Verteilung des durch die Lichtquelle abgestrahlten Lichtes innerhalb des Lichtleitelements. Es wird eine besonders homogene Lichtabstrahlung ohne ein Durchscheinen der einzelnen Lichtquellen ermöglicht.

Gemäß einer Weiterbildung weist die Kraftfahrzeug-Leuchteinrichtung eine gemeinsame Leiterplatte und/oder einen gemeinsamen Kabelbaum auf, wobei durch die gemeinsame Leiterplatte beziehungsweise den gemeinsamen Kabelbaum die Lichtquellen beziehungsweise die Abdecksegmente ansteuerbar sind. Insbesondere sind die Lichtquellen sowie die Abdecksegmente jeweils über dieselbe gemeinsame Leiterplatte beziehungsweise denselben gemeinsamen Kabelbaum mit einer Steuereinheit kontaktierbar. Beispielsweise weist die Kraftfahrzeug-Leuchteinrichtung ein Kontaktfeld auf, von welchem aus die Lichtquellen sowie die Abdecksegmente über die gemeinsame Leiterplatte und/oder den gemeinsamen Kabelbaum elektrisch kontaktiert sind. Auf diese Weise kann ein besonders kompaktes Erscheinungsbild der Kraftfahrzeug-Leuchteinrichtung ermöglicht werden. Andererseits wird eine besonders einfache Ansteuerbarkeit ermöglicht.

Ein zweiter Aspekt der vorliegenden Erfindung betrifft ein Kraftfahrzeug mit der erfindungsgemäßen Kraftfahrzeug-Leuchteinrichtung. Dabei ist die Kraftfahrzeug-Leuchteinrichtung vorzugsweise an einer Kraftfahrzeug-Inneneinrichtung des Kraftfahrzeugs angeordnet. Beispielsweise handelt es sich bei der Kraftfahrzeug-Inneneinrichtung um ein Armaturenbrett, um die Scheibenwurzel der Windschutzscheibe, um eine langgestreckte Zielkante, um eine Mittelkonsole und/oder eine Türinnenverkleidung. Eine Anwendung am Armaturenbrett, insbesondere entlang der Scheibenwurzel, ist dabei jedoch bevorzugt.

Das erfindungsgemäße Kraftfahrzeug ist bevorzugt als Kraftwagen, insbesondere als Personenkraftwagen oder Lastkraftwagen, oder als Personenbus oder Motorrad ausgestaltet.

Gemäß einer Weiterbildung ist vorgesehen, dass sich die Kraftfahrzeug-Leuchteinrichtung an der Kraftfahrzeug-Inneneinrichtung zumindest über 70 Prozent einer Breite des Kraftfahrzeugs erstreckt. Mit anderen Worten beträgt eine Länge der Kraftfahrzeug-Leuchteinrichtung beispielsweise 70 Prozent der Breite des Kraftfahrzeugs oder mehr. Insbesondere ist die Kraftfahrzeug-Leuchteinrichtung dabei zumindest über 70 Prozent der Breite des Kraftfahrzeugs an der Kraftfahrzeug-Inneneinrichtung angeordnet. Beispielsweise erstreckt sich die Kraftfahrzeug-Leuchteinrichtung somit entlang beider A-Säulen des Kraftfahrzeugs über zumindest 70 Prozent der Breite des Kraftfahrzeugs. In diesem Fall ist die Kraftfahrzeug-Leuchteinrichtung insbesondere, wie bereits oben beschrieben, linienförmig beziehungsweise langgestreckt ausgeführt. Insbesondere kann die Kraftfahrzeug-Leuchteinrichtung auch in diesem Beispiel hinsichtlich der Lichtquellen einteilig ausgeführt sein. Die Erfindung ist allerdings unabhängig von der Länge des Lichteiters. Das Band zwischen A-Säulen ist nur eine beispielhafte Verkörperung der Idee.

Ein dritter Aspekt der vorliegenden Erfindung betrifft ein korrespondierendes Verfahren zum Betreiben einer Kraftfahrzeug-Leuchteinrichtung, wobei die Kraftfahrzeug-Leuchteinrichtung ein Leuchtelement mit einer Vielzahl an Lichtquellen und ein Abdeckelement, welches dazu ausgebildet ist, zwischen einem transparenten und einem opaken Betriebszustand zu wechseln, aufweist.

Das Verfahren weist die Schritte, wie sie in Anspruch 9 definiert sind, auf.

Zu der Erfindung gehört auch eine Steuervorrichtung für die Kraftfahrzeug-Leuchteinrichtung. Die Steuervorrichtung kann eine Datenverarbeitungsvorrichtung oder eine Prozessoreinrichtung aufweisen, die dazu eingerichtet ist, eine Ausführungsform des erfindungsgemäßen Verfahrens durchzuführen. Die Prozessoreinrichtung kann hierzu zumindest einen Mikroprozessor und/oder zumindest einen Mikrocontroller und/oder zumindest einen FPGA (Field Programmable Gate Array) und/oder zumindest einen DSP (Digital Signal Processor) aufweisen. Des Weiteren kann die Prozessoreinrichtung Programmcode aufweisen, der dazu eingerichtet ist, bei Ausführen durch die Prozessoreinrichtung die Ausführungsform des erfindungsgemäßen Verfahrens durchzuführen. Der Programmcode kann in einem Datenspeicher der Prozessoreinrichtung gespeichert sein.

Zu der Erfindung gehören auch Weiterbildungen des erfindungsgemäßen Verfahrens, die Merkmale aufweisen, wie sie bereits im Zusammenhang mit den Weiterbildungen der erfindungsgemäßen Kraftfahrzeug-Leuchteinrichtung und/oder des erfindungsgemäßen Kraftfahrzeugs beschrieben worden sind. Aus diesem Grund sind die entsprechenden Weiterbildungen des erfindungsgemäßen Verfahrens hier nicht noch einmal beschrieben.

Die Erfindung umfasst auch die Kombinationen der Merkmale der beschriebenen Ausführungsformen. Die Erfindung umfasst also auch Realisierungen, die jeweils eine Kombination der Merkmale mehrerer der beschriebenen Ausführungsformen aufweisen, sofern die Ausführungsformen nicht als sich gegenseitig ausschließend beschrieben wurden.

Im Folgenden sind Ausführungsbeispiele der Erfindung beschrieben. Hierzu zeigt:
- Fig. 1: eine beispielhaften Kraftfahrzeug-Leuchteinrichtung in einer explosionsartigen schematischen Perspektivansicht;
- Fig. 2: die Kraftfahrzeug-Leuchteinrichtung in einem ersten beispielhaften Betriebszustand in einer schematischen Perspektivansicht;
- Fig. 3: die Kraftfahrzeug-Leuchteinrichtung in einem zweiten beispielhaften Betriebszustand in einer schematischen Perspektivansicht.
- Fig. 4: eine beispielhaften Kraftfahrzeug-Leuchteinrichtung in einer schematischen Esxplosionsansicht;
- Fig. 5: die Kraftfahrzeug-Leuchteinrichtung in einem dritten beispielhaften Betriebszustand in einer schematischen Perspektivansicht; und
- Fig. 6: die Kraftfahrzeug-Leuchteinrichtung in einem vierten beispielhaften Betriebszustand in einer schematischen Perspektivansicht.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden. Daher soll die Offenbarung auch andere als die dargestellten Kombinationen der Merkmale der Ausführungsformen umfassen. Des Weiteren sind die beschriebenen Ausführungsformen auch durch weitere der bereits beschriebenen Merkmale der Erfindung ergänzbar.

In den Figuren bezeichnen gleiche Bezugszeichen jeweils funktionsgleiche Elemente.

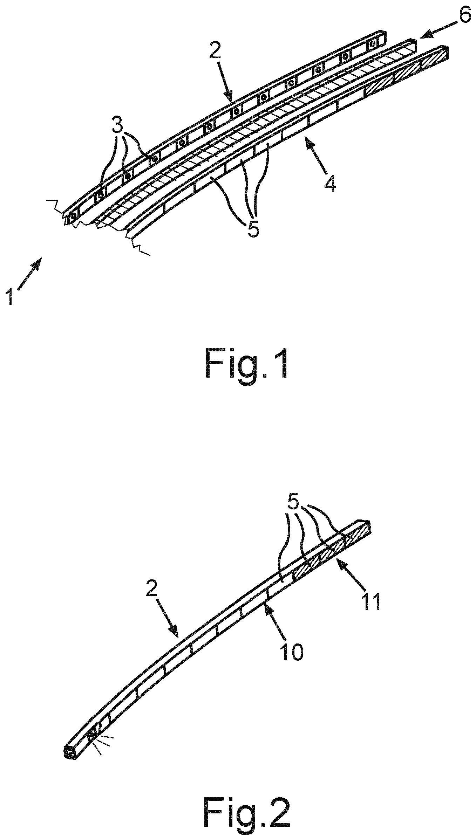

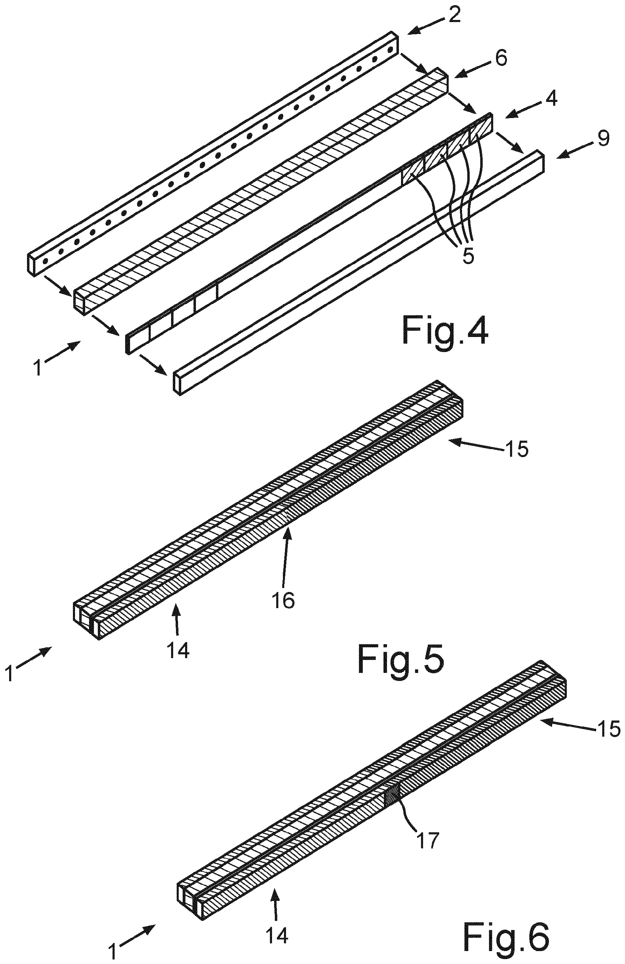

Fig. 1 zeigt in einer explosionsartigen Perspektivansicht eine Kraftfahrzeug-Leuchteinrichtung 1. Fig. 4 zeigt in einer Explosionsdarstellung eine weitere Ausführungsform der Kraftfahrzeug-Leuchteinrichtung 1. Die Kraftfahrzeug-Leuchteinrichtung 1 weist ein Leuchtelement 2, ein Abdeckelement 4 sowie ein Lichtleitelement 6. Das Lichtleitelement 6 kann dabei als Streifen mit einer gewissen Dicke ausgeführt sein. In seinen Abmessungen kann das Lichtleitelement 6 entlang einer Oberfläche dem Abdeckelement 4 entsprechen, jedoch eine größere Dicke aufweisen, aber mit etwas Dicke, sag mal 10 mm. Das Leuchtelement 2 ist auf einer ersten Seite des Lichtleitelements 6 angeordnet. Das Abdeckelement 4 ist auf einer der ersten Seite des Lichtleitelements 6 abgewandten beziehungsweise gegenüberliegenden zweiten Seite des Lichtleitelements 6 angeordnet. Das Leuchtelement 2 ist dazu ausgebildet, Licht abzustrahlen. Das Leuchtelement 2, das Lichtleitelements 6 und das Abdeckelement 4 sind vorzugsweise nacheinander entlang einer Hauptabstrahlrichtung des durch das Leuchtelement 2 abgestrahlten Lichtes angeordnet. Somit trifft das durch das Leuchtelement 2 abgestrahlte Licht vorzugsweise zunächst auf das Lichtleitelement 6. Derjenige Anteil des besagten Lichtes, welcher das Lichtleitelement 6 transmittiert trifft anschließend auf das Abdeckelement 4. Das Lichtleiterelement 6 ist insbesondere durchgängig entlang der Haupterstreckungsrichtung der Kraftfahrzeug-Leuchteinrichtung 1, es gibt insbesondere keine Kammern die das Lichtleiterelement 6 unterteilen.

Das Leuchtelement 2 weist eine Vielzahl an Lichtquellen 3 auf. Insbesondere handelt es sich bei dem Leuchtelement 2 um ein Lichtband. Das Leuchtelement 2 kann eine Vielzahl an LEDs beziehungsweise Leuchtdioden als Lichtquellen 3 aufweisen. Mit anderen Worten können die Lichtquellen 3 der Vielzahl durch jeweils eine oder mehrere LEDs beziehungsweise Leuchtdioden bereitgestellt sein. Selbstverständlich ist auch jede andere Ausführung von Lichtquellen 3, beispielsweise durch Halogen-Leuchtmittel, Glühleuchten und/oder Leuchtstoffleuchten beziehungsweise Gasentladungsleuchten möglich. Das Leuchtelement 2 beziehungsweise die Lichtquellen 3 können einfarbig oder mehrfarbig ausgeführt sein. Mit anderen Worten können die Lichtquellen 3 jeweils dazu ausgebildet sein, Licht einer Wellenlänge oder Licht mehrerer Wellenlängen abzustrahlen.

Das Abdeckelement 4 kann beispielsweise durch eine schaltbare Folie beziehungsweise eine sogenannte intelligente Folie und/oder ein sogenanntes schaltbares beziehungsweise intelligentes Glas bereitgestellt sein. Das Abdeckelement 4, also insbesondere die schaltbare Folie, ist vorliegend auf einem Schutzelement 9 laminiert. Das Schutzelement 9 kann durch einen Glasträger beziehungsweise aus Glas oder einem transparentem Kunststoff gebildet sein. Die schaltbare Folie des Abdeckelement 4 ist empfindlich, das Glas oder transparentem Kunststoff sollte daher nach Außen gerichtet sein. Das Schutzelement 9 kann dann einen Doppelnutzen erfüllen und dem Abdeckelement 4 einerseits eine gewisse Steifigkeit zur besseren Verarbeitung und Stabilität verleihen und andererseits das Abdeckelement 4 vor Umwelteinflüssen schützen. Dabei ist das Abdeckelement 4 in eine Vielzahl an Abdecksegmenten 5 unterteilt. Die Abdecksegmente 5 sind jeweils unabhängig voneinander zwischen einem opaken Betriebszustand und einem transparenten Betriebszustand umschaltbar. Mit anderen Worten ist das Abdeckelement 4 in jedem der Abdecksegmente 5 einzeln schaltbar. Mit nochmals anderen Worten ermöglicht das Abdeckelement 4, dass die jeweiligen Abdecksegmente 5 jeweils unabhängig voneinander in den transparenten und den opaken Betriebszustand überführt werden können beziehungsweise überführbar sind. Hierfür kann es beispielsweise vorgesehen sein, dass die einzelnen Abdecksegmente 5 zumindest bereichsweise elektrisch voneinander isoliert sind. Durch eine derartige elektrische Isolierung 9 kann ein jeweils unterschiedliches elektrisches Potential an die Abdecksegmente 5 angelegt werden. Mit anderen Worten ermöglichen die Abdecksegmente 5 in diesem Fall durch die jeweilige elektrische Isolierung 9 untereinander die Anlegung eines jeweils unterschiedlichen elektrischen Potentials. Die elektrische Isolierung 9 unterbricht insbesondere das Abdeckelement 4 und/oder teilt dieses in die einzelnen Abdecksegmente 5.

Das Lichtleitelement 6 ist zumindest aus einem intransparenten und/oder opaken, aber transluzenten Material gebildet. Insbesondere ist vorgesehen, dass das Lichtleitelement 6 aus einem Material gebildet ist, welches transluzent aber nicht transparent ist. Mit anderen Worten kann das Material intransparent sein. Auf diese Weise ergibt sich eine besonders gleichmäßige Verteilung des durch die Lichtquelle abgestrahlten Lichtes innerhalb des Lichtleitelements 6. Es wird eine besonders homogene Lichtabstrahlung ohne ein Durchscheinen der einzelnen Lichtquellen 3 ermöglicht.

Vorliegend ist jedes der Lichtquellen 3 über eine jeweilige erste Koppelfläche mit dem Lichtleitelement 6 gekoppelt. Jedes der Abdecksegmente 5 ist über eine jeweilige zweite Koppelfläche mit dem Lichtleitelement 6 gekoppelt. Die jeweiligen Lichtquelle 3 können dazu ausgebildet sein, Licht über die erste Koppelfläche ausschließlich in das Lichtleitelement 6 einzukoppeln.

Erfindungsgemäß sind das Leuchtelement 2 mit den Lichtquellen 3, das Lichtleitelement 6 und das Abdeckelement 4 mit den Abdecksegmenten 5 entlang der Hauptabstrahlrichtung der Lichtquellen 3 in dieser Reihenfolge nacheinander angeordnet. Dabei überlappen sich das Leuchtelement 2 mit den Lichtquellen 3, das Lichtleitelement 6 und das Abdeckelement 4 mit den Abdecksegmenten 5 entlang der Hauptabstrahlrichtung im vorliegenden Ausführungsbeispiel gegenseitig zumindest im Wesentlichen vollständig.

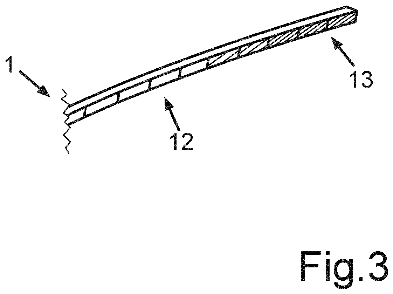

Die Fig. 2 und 3 zeigen, wie eine Abstrahlung von Licht durch die Kraftfahrzeug-Leuchteinrichtung 1 durch die Abdeckung der Lichtquellen 3 und des Lichtleitelements 6 durch die Abdecksegmente 5 besonders beeinflusst werden kann. Insbesondere ist es möglich, durch das segmentierte Abdeckelement 4 scharfe (Fig. 2) und/oder weiche (Fig. 3) Konturen entlang der Lichtquellen 3 einzustellen. Dies wird durch jeweiliges Ansteuern der Abdecksegmente 5 hinsichtlich ihrer Opazität beziehungsweise Transparenz und/oder Transluzenz ermöglicht. Durch eine entsprechenden Verlauf der Opazität beziehungsweise Transparenz und/oder Transluzenz der Abdecksegmente 5 entlang des linienförmigen Verlaufs der Kraftfahrzeug-Leuchteinrichtung 1 können unterschiedliche Effekte erzielt werden. Es entsteht somit ein weiterer Freiheitsgrad in der Beeinflussung der Lichtabstrahlung der Kraftfahrzeug-Leuchteinrichtung, nämlich die Ansteuerung der einzelnen Abdecksegmente, zusätzlich zur Ansteuerung der Vielzahl an Lichtquellen beziehungsweise des Leuchtelements.

Fig. 2 zeigt beispielhaft, wie die Abdecksegmente 5 eines ersten Längenbereichs 10 und eines zweiten Längenbereichs 11 der Kraftfahrzeug-Leuchteinrichtung 1 hinsichtlich ihrer Opazität beziehungsweise Transparenz und/oder Transluzenz binär unterschiedlich angesteuert werden. Hierdurch ergibt sich eine scharfe Kante am Übergang zwischen dem ersten Längenbereich 10 und dem zweiten Längenbereich 11. Die Abdecksegmente 5 des ersten Längenbereichs 10 weisen aufgrund ihrer Schaltzustandes eine geringere Opazität beziehungsweise eine höhere Transparenz und/oder Transluzenz auf als die Abdecksegmente 5 des zweiten Längenbereichs 11. Umgekehrt weisen vorliegend die Abdecksegmente 5 des zweiten Längenbereichs 11 aufgrund ihrer Schaltzustandes eine höhere Opazität beziehungsweise eine geringe Transparenz und/oder Transluzenz auf als die Abdecksegmente 5 des ersten Längenbereichs 10. Der jeweilige Schaltzustand ist dabei insbesondere von der jeweils anliegenden Spannung an den Abdecksegmenten 5 abhängig.

Fig. 3 zeigt beispielhaft, wie die Abdecksegmente 5 von einer ersten Seite 12 eines Übergangs und einer zweiten Seite 13 des Übergangs hinsichtlich ihrer Opazität beziehungsweise Transparenz und/oder Transluzenz zunehmend unterschiedlich angesteuert werden. Hierdurch ergibt sich der kontinuierliche, weiche Übergang zwischen der ersten Seite 12 und der zweiten Seite 13. Die Abdecksegmente 5 weisen ausgehend von der ersten Seite 12 hin zur zweiten Seite 13 aufgrund ihrer Schaltzustandes eine zunehmende Opazität beziehungsweise eine abnehmende Transparenz und/oder Transluzenz auf. Umgekehrt weisen vorliegend die Abdecksegmente 5 ausgehend von der zweiten Seite 13 hin zur ersten Seite 12 aufgrund ihrer Schaltzustandes eine abnehmende Opazität beziehungsweise eine zunehmende Transparenz und/oder Transluzenz auf.

Fig. 5 zeigt beispielhaft, wie die jeweiligen Lichtquellen 3 eines ersten Farbbereichs 14 und eines zweiten Farbbereichs 15 der Kraftfahrzeug-Leuchteinrichtung 1 hinsichtlich ihrer Farbe unterschiedlich angesteuert werden ohne eine entsprechende Ansteuerung der Abdecksegmente 5. Die Leuchtmittel 3 des ersten Farbbereichs 14 leuchten beispielsweise grün und die Leuchtmittel 3 des zweiten Farbbereichs 15 leuchten beispielsweise rot. Aufgrund des Lichtleitelements 6 ergibt sich ein Übergangsbereich 16 zwischen dem ersten Farbbereichs 14 und dem zweiten Farbbereichs 15. In dem Übergangsbereich 16 mischen sich die unterschiedlichen Farben beider Farbbereich 14, 15 aufgrund der Leitung des Lichts im Lichtleitelement 6.

Fig. 6 zeigt beispielhaft, wie durch entsprechende Ansteuerung der Abdecksegmente 5 der Übergang 16 vermieden werden kann. Eines oder mehrere Abdecksegmente 5 in dem Übergangsbereich 16 zwischen dem ersten Farbbereichs 14 und dem zweiten Farbbereichs 15 werden in einen opaken Zustand geschaltet. Somit entsteht ein dunkler Zwischenbereich 17. Der Zwischenbereich 17 leuchtet mit geringerer Intensität als die benachbarten Farbbereiche 14, 15. Die Opazität des einen oder der mehreren Abdecksegmente 5 in dem Zwischenbereich 17 ist größer eingestellt als die Opazität von Abdecksegmenten 5 in den benachbarten Farbbereichen 14, 15.

Insgesamt zeigen die Beispiele, wie eine Methode für eine klare Abgrenzung zwischen LED-Segmenten bei einem Lichtband mittels einer schaltbaren Folie bereitgestellt werden kann.

## Patentansprüche

1. Kraftfahrzeug-Leuchteinrichtung (1), mit
- einem Leuchtelement (2) mit einer Vielzahl von Lichtquellen (3), und
- einem Abdeckelement (4), welches dazu ausgebildet ist, zwischen einem transparenten und einem opaken Betriebszustand zu wechseln,
- das Abdeckelement (4) eine Vielzahl von Abdecksegmenten (5) aufweist, wobei jedes der Abdecksegmente (5) hinsichtlich des transparenten und opaken Betriebszustands einzeln ansteuerbar ist, und
- die Kraftfahrzeug-Leuchteinrichtung (1) ein Lichtleitelement (6) aufweist, wobei das Lichtleitelement (6) dazu ausgebildet ist, durch die Lichtquellen (3) abgestrahltes Licht von einer Vielzahl erster Koppelflächen, an welchen das Lichtleitelement (6) optisch an jeweils eine der Lichtquellen (3) angekoppelt ist, zu einer Vielzahl zweiter Koppelflächen zu leiten, an welchen das Lichtleitelement (6) optisch an jeweils eines der Abdecksegmente (5) angekoppelt ist, wobei die zweiten Koppelflächen jeweils größer als die ersten Koppelflächen sind, wobei
- die Lichtquellen (3) des Leuchtelements (2) linienförmig angeordnet sind
**dadurch gekennzeichnet, dass**
- die Kraftfahrzeug-Leuchteinrichtung (1) als Lichtband ausgebildet ist, und
- das Leuchtelement (2), das Lichtleitelement (6) und das Abdeckelement (4) nacheinander entlang einer Hauptabstrahlrichtung des durch das Leuchtelement (2) abgestrahlten Lichts angeordnet sind.

2. Kraftfahrzeug-Leuchteinrichtung (1) nach Anspruch 1,
**dadurch gekennzeichnet, dass**
jede Lichtquelle (3) der Vielzahl von Lichtquellen (3) benachbart zu höchstens zwei Lichtquellen (3) angeordnet ist.

3. Kraftfahrzeug-Leuchteinrichtung (1) nach einem der vorhergehenden Ansprüche,
**dadurch gekennzeichnet, dass**
das Abdeckelement (4) alle Lichtquellen (3) in Richtung einer Hauptabstrahlrichtung der Kraftfahrzeug-Leuchteinrichtung (1) überlappt.

4. Kraftfahrzeug-Leuchteinrichtung (1) nach einem der vorhergehenden Ansprüche,
**dadurch gekennzeichnet, dass**
das Abdeckelement (4) auf ein Schutzelement (9) laminiert ist.

5. Kraftfahrzeug-Leuchteinrichtung (1) nach einem der vorhergehenden Ansprüche,
**dadurch gekennzeichnet, dass**
das Lichtleitelement (6) zumindest aus einem intransparenten und/oder opaken aber transluzenten Material gebildet ist.

6. Kraftfahrzeug-Leuchteinrichtung (1) nach einem der vorhergehenden Ansprüche,
**gekennzeichnet, durch**
eine gemeinsame Leiterplatte und/oder einen gemeinsamen Kabelbaum, durch welchen die Lichtquellen (3) sowie die Abdecksegmente (5) ansteuerbar sind.

7. Kraftfahrzeug mit einer Kraftfahrzeug-Leuchteinrichtung (1) nach einem der vorhergehenden Ansprüche, wobei die Kraftfahrzeug-Leuchteinrichtung (1) an einer Kraftfahrzeug-Inneneinrichtung (1), beispielsweise einem Armaturenbrett, des Kraftfahrzeugs angeordnet ist.

8. Kraftfahrzeug nach Anspruch 7,
**dadurch gekennzeichnet, dass**
sich die Kraftfahrzeug-Leuchteinrichtung (1) an der Kraftfahrzeug-Inneneinrichtung zumindest über 70% einer Breite des Kraftfahrzeugs erstreckt.

9. Verfahren zum Betreiben einer Kraftfahrzeug-Leuchteinrichtung (1), welche als Lichtband ausgebildet ist, aufweisend:
- ein Leuchtelement (2) mit einer Vielzahl von Lichtquellen (3), welche linienförmig angeordnet sind, und
- ein Abdeckelement (4), welches dazu ausgebildet ist, zwischen einem transparenten und einem opaken Betriebszustand zu wechseln, **gekennzeichnet, durch** die Schritte:
- einzelnes Ansteuern einer Vielzahl von Abdecksegmenten (5) des Abdeckelements (4) hinsichtlich des transparenten und opaken Betriebszustands, und
- Leiten von durch die Lichtquellen (3) abgestrahltem Licht durch ein Lichtleitelement (6) von einer Vielzahl erster Koppelflächen, an welchen das Lichtleitelement (6) optisch an jeweils eine der Lichtquellen (3) angekoppelt ist, zu einer Vielzahl zweiter Koppelflächen, an welchen das Lichtleitelement (6) optisch an jeweils eines der Abdecksegmente (5) angekoppelt ist, wobei die zweiten Koppelflächen jeweils größer als die ersten Koppelflächen sind, wobei das Leuchtelement (2), das Lichtleitelement (6) und das Abdeckelement (4) nacheinander entlang einer Hauptabstrahlrichtung des durch das Leuchtelement (2) abgestrahlten Lichts angeordnet sind.

## Claims

1. A motor vehicle lighting device (1) comprising
- a lighting element (2) with a plurality of light sources (3), and
- a cover element (4), which is formed to change between a transparent and an opaque operating state,
- the cover element (4) comprises a plurality of cover segments (5), wherein each of the cover segments (5) can be individually actuated with respect to the transparent and opaque operating state, and
- the motor vehicle lighting device (1) comprises a light guiding element (6), wherein the light guiding element (6) is formed to guide light emitted by the light sources (3) from a plurality of first coupling surfaces, at which the light guiding element (6) is optically coupled to each one of the light sources (3), to a plurality of second coupling surfaces, at which the light guiding element (6) is optically coupled to each one of the cover segments (5), wherein the second coupling surfaces are each larger than the first coupling surfaces, wherein
- the light sources (3) of the lighting element (2) are linearly arranged, **characterized in that**
- the motor vehicle lighting device (1) is formed as a light band, and
- the lighting element (2), the light guiding element (6) and the cover element (4) are arranged in succession along a main radiation direction of the light emitted by the lighting element (2).

2. The motor vehicle lighting device (1) according to claim 1,
**characterized in that**
each light source (3) of the plurality of light sources (3) is arranged adjacent to at most two light sources (3).

3. The motor vehicle lighting device (1) according to any one of the preceding claims,
**characterized in that**
the cover element (4) overlaps all of the light sources (3) in the direction of a main emission direction of the motor vehicle lighting device (1).

4. The motor vehicle lighting device (1) according to any one of the preceding claims,
**characterized in that**
the cover element (4) is laminated onto a protective element (9).

5. The motor vehicle lighting device (1) according to any one of the preceding claims,
**characterized in that**
the light guiding element (6) is formed at least of a non-transparent and/or opaque, but translucent material.

6. The motor vehicle lighting device (1) according to any one of the preceding claims,
**characterized by**
a common circuit board and/or a common cable harness, by which the light sources (3) as well as the cover segments (5) can be actuated.

7. A motor vehicle with a motor vehicle lighting device (1) according to any one of the preceding claims, wherein the motor vehicle lighting device (1) is arranged at a motor vehicle interior equipment, for example a dashboard, of the motor vehicle.

8. The motor vehicle according to claim 7,
**characterized in that**
the motor vehicle lighting device (1) extends at the motor vehicle interior equipment at least across 70 % of a width of the motor vehicle.

9. A method for operating a motor vehicle lighting device (1), which is formed as a light band, comprising:
- a lighting element (2) with a plurality of light sources (3), and
- a cover element (4), which is formed to change between a transparent and an opaque operating state,
**characterized by** the steps:
- individually actuating a plurality of cover segments (5) of the cover element (4) with respect to the transparent and opaque operating state, and
- guiding light emitted by the light sources (3), which are linearly arranged, by a light guiding element (6) from a plurality of first coupling surfaces, at which the light guiding element (6) is optically coupled to each one of the light sources (3), to a plurality of second coupling surfaces, at which the light guiding element (6) is optically coupled to each one of the cover segments (5), wherein the second coupling surfaces are each larger than the first coupling surfaces, wherein the lighting element (2), the light guiding element (6) and the cover element (4) are arranged in succession along a main radiation direction of the light emitted by the lighting element (2).

## Revendications

1. Dispositif d'éclairage de véhicule à moteur (1), comportant :
- un élément d'éclairage (2) ayant une pluralité de sources de lumière (3), et
- un élément de recouvrement (4) conçu pour basculer entre un état de fonctionnement transparent et un état de fonctionnement opaque,
- l'élément de recouvrement (4) comportant une pluralité de segments de recouvrement (5), chacun des segments de recouvrement (5) pouvant être commandé individuellement en ce qui concerne l'état de fonctionnement transparent et opaque, et
- le dispositif d'éclairage de véhicule à moteur (1) comportant un élément de conduction de lumière (6), l'élément de conduction de lumière (6) étant conçu pour guider la lumière émise par les sources de lumière (3) à partir d'une pluralité de premières surfaces de couplage, au niveau desquelles l'élément de conduction de lumière (6) est respectivement couplé optiquement à l'une des sources de lumière (3), jusqu'à une pluralité de secondes surfaces de couplage, au niveau desquelles l'élément de conduction de lumière (6) est respectivement couplé optiquement à l'un des segments de recouvrement (5), les secondes surfaces de couplage étant respectivement plus grandes que les premières surfaces de couplage,
- les sources de lumière (3) de l'élément d'éclairage (2) étant disposées de façon linéaire,
**caractérisé en ce que**
- le dispositif d'éclairage de véhicule à moteur (1) est réalisé sous la forme d'un bandeau lumineux,
et
- l'élément d'éclairage (2), l'élément de conduction de lumière (6) et l'élément de recouvrement (4) sont disposés de manière successive le long d'une direction d'émission principale de la lumière émise par l'élément d'éclairage (2).

2. Dispositif d'éclairage de véhicule à moteur (1) selon la revendication 1,
**caractérisé en ce que**
chaque source de lumière (3) de la pluralité de sources de lumière (3) est disposée adjacente à un maximum de deux sources de lumière (3).

3. Dispositif d'éclairage de véhicule à moteur (1) selon l'une des revendications précédentes,
**caractérisé en ce que**
l'élément de recouvrement (4) chevauche toutes les sources de lumière (3) en direction d'une direction d'émission principale du dispositif d'éclairage de véhicule à moteur (1).

4. Dispositif d'éclairage de véhicule à moteur (1) selon l'une des revendications précédentes,
**caractérisé en ce que**
l'élément de recouvrement (4) est stratifié sur un élément de protection (9).

5. Dispositif d'éclairage de véhicule à moteur (1) selon l'une des revendications précédentes,
**caractérisé en ce que**
l'élément de conduction de lumière (6) est formé au moins d'un matériau non transparent et/ou opaque mais translucide.

6. Dispositif d'éclairage de véhicule à moteur (1) selon l'une des revendications précédentes,
**caractérisé par**
une carte imprimée commune et/ou un faisceau de câbles commun qui permettent de commander les sources de lumière (3) ainsi que les segments de recouvrement (5).

7. Véhicule à moteur ayant un dispositif d'éclairage de véhicule à moteur (1) selon l'une des revendications précédentes, dans lequel le dispositif d'éclairage de véhicule à moteur (1) est disposé sur un équipement intérieur de véhicule à moteur (1), par exemple un tableau de bord, du véhicule à moteur.

8. Véhicule à moteur selon la revendication 7,
**caractérisé en ce que**
le dispositif d'éclairage de véhicule à moteur (1) de l'équipement intérieur de véhicule à moteur s'étend sur au moins 70 % d'une largeur du véhicule à moteur.

9. Procédé pour faire fonctionner un dispositif d'éclairage de véhicule à moteur (1) réalisé sous la forme d'un bandeau lumineux, comportant :
- un élément d'éclairage (2) ayant une pluralité de sources de lumière (3) disposées de façon linéaire, et
- un élément de recouvrement (4) conçu pour basculer entre un état de fonctionnement transparent et un état de fonctionnement opaque,
**caractérisé par** les étapes consistant à :
- commander individuellement une pluralité de segments de recouvrement (5) de l'élément de recouvrement (4) en ce qui concerne l'état de fonctionnement transparent et opaque, et
- guider la lumière émise par les sources de lumière (3) à travers un élément de conduction de lumière (6) à partir d'une pluralité de premières surfaces de couplage, au niveau desquelles l'élément de conduction de lumière (6) est respectivement couplé optiquement à l'une des sources de lumière (3), jusqu'à une pluralité de secondes surfaces de couplage, au niveau desquelles l'élément de conduction de lumière (6) est respectivement couplé optiquement à l'un des segments de recouvrement (5), les secondes surfaces de couplage étant respectivement plus grandes que les premières surfaces de couplage, l'élément d'éclairage (2), l'élément de conduction de lumière (6) et l'élément de recouvrement (4) étant disposés de manière successive le long d'une direction d'émission principale de la lumière émise par l'élément d'éclairage (2).
